# EUROPÄISCHE PATENTSCHRIFT

(11) **EP 2 248 588 B1**
(45) Veröffentlichungstag und Bekanntmachung des Hinweises auf die Patenterteilung: **08.07.2015**
(21) Anmeldenummer: 10162009.4
(22) Anmeldetag: 05.05.2010
(51) Int. Cl.: B01L 3/00, B01L 9/00

(54) **Montier- und demontierbares Mikrofluidiksystem und Verfahren zur Flutung des Systems**
Mountable and dismountable microfluid system and method for flooding the system
Système microfluidique pouvant être monté et démonté et procédé de noyage du système

(30) Priorität: 08.05.2009 DE 102009020449; 05.06.2009 DE 102009024048
(43) Veröffentlichungstag der Anmeldung: 10.11.2010
(73) Patentinhaber: Institut für Bioprozess- und Analysenmesstechnik e.V., 37308 Heilbad Heiligenstadt (DE)
(72) Erfinder: Gastrock, Gunter, 37308, Heilbad Heiligenstadt (DE); Grodrian, Andreas, 37308 Heilbad Heiligenstadt (DE); Lemke, Karen, 37073, Göttingen (DE); Wiedemeier, Stefan, 37520, Osterode/Harz (DE); Römer, Robert, 37308, Heilbad Heiligenstadt (DE)
(74) Vertreter: Liedtke, Klaus

(56) Entgegenhaltungen:
- WO-A1-2006/046164
- WO-A2-03/062133
- US-A1- 2005 226 771
- US-A1- 2005 272 142
- US-A1- 2009 224 482
- US-B1- 6 399 394
- US-B1- 6 450 203

## Beschreibung

Die Erfindung betrifft ein Mikrofluidiksystem für das Erzeugen, Kultivieren, Manipulieren, Analysieren und Konservieren von einphasigen und mehrphasigen Fluiden im Mikromaßstab und ein Verfahren zur Flutung des Systems. Derartige Systeme werden u. a. für die Analyse organischer und anorganischer Substanzen, für chemische und biologische Prozesse, aber auch für die Kultivierung jeglicher Art von biologischen Zellen eingesetzt. Die verwendeten Fluide sind gasförmig oder flüssig. Mehrphasige Fluide werden u.a. benötigt, wenn Substanzen wie beispielsweise Probematerialien in beispielsweise durch Oberflächenspannungen oder chemische Reaktionen gebildete stabile Mikrosphären eingeschlossen werden und durch das Mikrofluidiksystem transportiert werden sollen. Der Transport von Substanzen kann auch in einphasigen Fluiden erfolgen.

Die Herstellung von Kanalstrukturen für Mikrofluidiksysteme setzt entsprechend präzise Fertigungstechnologien voraus, die zunächst der Halbleiterfertigung entlehnt wurden. Eingeführte Verfahren beruhen auf dem anisotropen oder isotropen Ätzen von Silizium mit anschließendem Deckeln der Kanalstruktur durch anodisches Bonden (DE 196 48 695 C2).

Bekannt ist auch die Herstellung der Kanalstrukturen durch Bearbeitung der Oberflächen von Kanalkörpern bestehend aus Kunststoffen, Metallen oder Gläsern mittels Laserablatation (u. a. US 55 71 410 A), Heißprägen (u. a. US 2003/0165079 A1) oder Ausfräsen mit anschließender Deckelung der Kanalstruktur durch eine planare Kunststoffplatte z. B. durch Verklebung (DE 199 27 533 B4). Weitere Techniken beruhen auf der Abformung von Mastern in plastische Werkstoffe (LIGA-Verfahren, PDMS-Strukturen).

Zur Vermeidung von aufwändig herzustellenden Masken und Werkzeugen sind auch CNC-Verfahren bekannt, wie z.B. die Fräsbearbeitung von Glaskeramik oder Rapid-Prototyping-Verfahren.

Das Deckeln der planar hergestellten Kanalstrukturen beispielsweise durch anodisches Bonden, Verklebung oder durch Verschweißen stellt hohe Anforderungen verbunden mit hohen Kosten an die entsprechenden Fertigungstechniken, sind doch einerseits Mikrospalte zwischen Kanalkörper und Abdeckplatte, andererseits auch das teilweise Verschließen von Mikrokanälen zu vermeiden.

Das irreversible Deckeln der Kanalstruktur hat Nachteile. Die Reinigung der im Mikrosystem eingebrachten Kanäle ist nahezu unmöglich, sodass z. B. in Hinblick auf Querkontaminierungen das gesamte planare Mikrosystem als Einwegprodukt betrachtet werden sollte. Der Betrachtung als Einwegprodukt steht die zunehmende Komplexität des Mikrofluidiksystems gegenüber, das außer der eigentlichen Kanalstruktur auch fest integrierte Sensoren, Aktoren wie z. B. Pumpen und Ventile, passive Elemente wie Filter und Membranen sowie elektronische Baugruppen enthalten kann.

Hinzu kommt die Notwendigkeit, die Oberflächen des Mikrokanals hinsichtlich der Oberflächeneigenschaften zu funktionalisieren, was in geschlossenen Mikrokanälen aufwändig ist und die Zahl der Funktionalisierungstechniken stark limitiert. Außerdem ist die Kontrolle der Oberflächeneigenschaften nicht oder nur sehr eingeschränkt möglich.

Eine solche Funktionalisierung besteht beispielsweise in der abschnittsweisen hydrophoben und hydrophilen Beschichtung von Kanalabschnitten, was insbesondere für mehrphasige Fluidströme notwendig ist. Solche Fluidströme bestehen im Wesentlichen aus sich abwechselnd wiederholenden Bereichen polarer und unpolarer Fluide, die aufgrund der unterschiedlichen Polaritäten eindeutige Phasengrenzen ausbilden und somit die Bildung von Mikrosphären erlauben. Die Applikation mehrphasiger Fluidströme in Mikrosystemen setzt voraus, dass alle Oberflächen des Mikrokanals für das Transportfluid des mehrphasigen Fluidstromes benetzbar sind und für die zweite Phase des mehrphasigen Fluidstromes, die Mikrosphäre, nicht benetzbar sind.

In der DE 691 14 838 T2 wird ein Mikrofluidiksystem vorgeschlagen, das aus zwei planaren Basisplatten sowie einer dazwischen liegenden Abstandsschicht besteht, in der die Kanalstruktur durch Aussparungen bzw. Vertiefungen eingebracht ist, und das flüssigkeitsdicht verpresst ist. Vorteil ist, dass das Schließen und Abdichten der Kanalstruktur reversibel durch Aufbringen einer Kraft erfolgt. Allerdings verteilt sich diese Kraft auf die gesamte Auflagefläche, sodass für eine sichere Abdichtung eine relativ große Kraft erforderlich ist. Zur Begrenzung der Kräfte wurde in der gleichen Schrift deshalb vorgeschlagen, die Berührungsfläche der Abstandsschicht mit den Basisschichten auf einen Streifen entlang der eigentlichen Mikrokanäle zu begrenzen. Bei komplexen Kanalstrukturen sind dennoch relativ hohe Verpresskräfte vorzusehen. Die Strukturierung der notwendigerweise flexiblen Abstandsschicht ist zudem nicht einfach und schränkt die Art der für die Abstandsschicht verwendeten Materialien ein. Insbesondere bei mehrphasigen Fluidströmen mit einem unpolaren Transportfluid wäre es wünschenswert, die Abstandsschicht aus Teflon zu gestalten, das optimale hydrophobe Eigenschaften besitzt und zudem chemisch nahezu inert ist.

In der US 59 64 239 A wird ein montier- und demontierbares Fluidiksystem beschrieben, bei dem die einzelnen, mit Strukturen versehenen Schichten gegeneinander ausgerichtet werden und durch eine Klammer zusammengepresst werden. Verschiedene Ebenen werden durch Löcher fluidisch miteinander verbunden. Pneumatisch angetriebene Ventile können mit integriert werden. Dabei wird vorausgesetzt, dass durch die Klammer eine hinreichend große Kraft zum Abdichten der Kanalstruktur erzeugt wird.

Ferner ist in US 64 50 203 B1 eine gedichtete Mikrofluidik-Vorrichtung beschrieben, mit der ein gesteuertes Schließen eines Mikrokanals und die Unterdrückung eines Restflusses möglich ist, wobei der Kanalverschluss durch einen Flüssigkeitstropfen erfolgt, der mit dem zu transportierenden Fluid nicht mischbar ist. Der Flüssigkeitstropfen lässt sich beispielsweise durch magnetische Felder in eine Tasche bewegen, wodurch der Mikrokanal für das transportierte Fluid wieder durchlässig wird.

In US 2005/0226771 A1 ist ein Hochgeschwindigkeits-Transfersystem für Mikroplatten beschieben, die jeweils eine Vielzahl von Wells in Form von Kavitäten in der Mikroplatte oder als strukturierte Spots auf der Oberfläche der Mikroplatte zur Aufnahme von Proben biologischen Materials enthalten. Die Abdeckung der Wells einer Mikroplatte erfolgt durch eine gemeinsame Abdeckdichtung, die an die Wells, beispielsweise durch ein Druckkissen, angepresst wird. Die Verwendung einer Flüssigkeit ist dabei alternativ zu einer festen bzw. elastischen Abdeckdichtung vorgesehen.

Aus WO 2006/046164 A1 ist ein Fluidcontainer, der Mikrokanäle und Kammern enthält, bekannt. Die Abdichtung des Kanalkörpers mit einer Abdeckplatte erfolgt durch Formgrate, die an ihrer Stirnseite mit einer aushärtenden Dichtflüssigkeit beschichtet werden. Die Anordnung verwendet eine Klebeverbindung zwischen Kanalkörper und Abdeckplatte. Der mit Klebstoff gefüllte Kanal ist nicht mehr für den Transport eines Mediums geeignet.

US 2009/0224482 A1 beschreibt einen kundenspezifischen Dichtring, der mit hydrophoben oder hydrophilen Eigenschaften ausgestattet sein kann. Dabei kann eine umlaufende Rahmendichtung vorgesehen sein. Die Abdichtung zwischen den Hauptteilen erfolgt durch eine mittels Kleber befestigte elastische Dichtung.

Aufgabe der Erfindung ist es, eine Anordnung für ein leicht montier- und demontierbares Mikrofluidiksystem unter Vermeidung der oben genannten, dem Stand der Technik anhaftende Nachteile vorzuschlagen sowie ein Verfahren zur Flutung des Systems anzugeben.

Die Aufgabe wird mit einer Vorrichtung mit den Merkmalen des Anspruchs 1 gelöst.

Die Aufgabe wird auch durch ein Verfahren gemäß Anspruch 14 gelöst.

Die Vorrichtung enthält einen Stapel von Platten, wobei mindestens eine Platte an seiner Oberfläche Vertiefungen für Kanäle enthält. Zwischen mindestens einer Deckplatte und mindestens einer mit den Kanälen versehenen Platte befindet sich ein Kapillarspalt, der mit einem Dichtfluid gefüllt ist, dessen Benetzungsfähigkeit gegenüber den Plattenoberflächen höher als die Benetzungsfähigkeit der Transport- und Probenfluide ist, die durch die Kanäle transportiert werden. Als Dichtfluid und als Transport- und Probenfluide können sowohl polar als auch unpolar ausgebildete Fluide verwendet werden.

Eine vorteilhafte Ausgestaltung sieht vor, dass zwischen der Basis- und der Deckplatte eine oder mehrere Kanalplatten mit Ausformungen zur Durchleitung eines Proben- und/oder Transportfluids angeordnet sind.

Ferner ist es möglich, dass Mittel zum Ausrichten der Basis-, Deck- und/oder Kanalplatten vorhanden sind.

Um die Basis- und Deckplatte und die dazwischen liegenden Kanalplatten miteinander zu verpressen, können Spannelemente verwendet werden.

Vorteilhaft ist es dabei, eine Rahmendichtung anzuordnen, welche die gesamte Kanalstruktur umgibt.

Zum Befüllen des Dichtfluids können Füllöffnungen in der Basis- und Deckplatte angeordnet werden.

Ferner ist es möglich, dass mindestens eine der Basis- oder Deckplatte und/oder eine der dazwischen liegenden Kanalplatten aus transparentem Material besteht.

Eine weitere vorteilhafte Ausführung sieht vor, dass mindestens eine der Basis- oder Deckplatte und/oder eine der dazwischen liegenden Kanalplatten partiell hydrophile und partiell hydrophobe Oberflächeneigenschaften besitzt.

Es ist auch möglich, dass mindestens eine der Basis- oder Deckplatten und/oder eine der dazwischen liegenden Kanalplatten aktive und passive Funktionselemente sowie fluidische Anschlüsse enthalten.

Die aktiven und passiven Funktionselemente können funktionalisiert sein, z.B. mit funktionellen Substanzen wie Antikörpern, Antigenen etc. oder hydrophob oder hydrophil beschichtet sein.

Im Kanal können sich Partikel befinden, die funktionalisiert sind und die durch Zuführung von Energie (z.B. von magnetischer Energie) an einem definierten Ort im Kanal fixiert werden können. Durch Verringerung der Energie kann die Fixierung der Partikel gelöst und diese im Kanal weitertransportiert werden.

Vorteilhaft ist es weiter, dass die Oberflächen der Basis- oder Deckplatte und/oder eine der dazwischen liegenden Kanalplatten mit einer Rauigkeit versehen sind, sodass beim Zusammenpressen der Basis- und Deckplatte und einer der dazwischen liegenden Kanalplatten Kapillarspalte definierter Weite entstehen.

Eine weitere Ausführung der Erfindung ermöglicht es, die Anordnung als fluidischen Schalter zu verwenden, wobei ein oder mehrere eingangsseitige Fluidströme ein oder mehreren Ausgangskanälen zugeordnet werden können. Der Stapel von Platten, bei dem Kanäle für den Transport von Fluiden durch ein Dichtfluid in einem Kapillarspalt abgedichtet werden, bietet die Möglichkeit, durch Verschieben oder Verdrehen der Platten gegeneinander Schaltfunktionen für die Zuführung und Abführung von Fluidströmen auszubilden.

Mikrofluidiksysteme zur Analyse von Proben bzw. zur Durchführung chemischer Reaktionen besitzen meist mehrere Betriebszustände. Proben- und Wirkstoffströme müssen in wechselnden Zuordnungen durch Ventile ein- und ausgeschaltet werden. Bekannte Mikroventile, die in ein Mikrofluidiksystem integriert werden können, sind relativ kostenaufwändig und für eine Reinigung schwer zugänglich.

Ein einfaches System zum Schalten der Fluide ist die örtlich begrenzte Viskositätsveränderung eines Fluids im Kanal durch Energieeintrag. Dieser Vorgang ist reversibel. Somit sind keine zusätzlichen Schaltelemente notwendig.

Alle Elemente des erfindungsgemäßen Mikrofluidiksystems können aus Materialien bestehen, die desinfizierbar oder sterilisierbar, z B. autoklavierbar sind. Es ist möglich, das Mikrofluidiksystem im montierten Zustand zu desinfizieren oder zu sterilisieren, z B. zu autoklavieren. Es ist auch möglich, die einzelnen Elemente des Mikrofluidiksystems zu desinfizieren oder zu sterilisieren, z B. zu autoklavieren, und diese dann beispielsweise unter sterilen Verhältnissen einer Sterilwerkbank zum vollständigen Mikrofluidiksystem zusammenzusetzen.

Das Fluten des Mikrofluidiksystems erfolgt beispielsweise dadurch, dass das Mikrofluidiksystem im demontierten Zustand in einen Behälter mit Dichtfluid getaucht wird, unter Luftabschluss die Basis- und Deckplatte und zwischen liegende Kanalplatten ausgerichtet und mit einander verspannt werden und dass nach dem Verspannen des Mikrofluidiksystems und Herstellung der fluidischen Anschlüsse die in den Kanälen befindliche Dichtfluid durch Proben- oder Transportfluid ersetzt wird.

Die Erfindung soll anhand von Ausführungsbeispielen beschrieben werden. Die Figuren 8 bis 10 zeigen kein vollständiges Ausführungsbeispiel des Mikrofluidsystems, dienen aber zum Verständnis der Transportmechanismen durch die Kanäle des Systems.

Es zeigen
- Figur 1: den schematischen Aufbau bekannter Mikrofluidiksysteme,
- Figur 2: den schematischen Aufbau des erfindungsgemäßen Mikrofluidiksystems,
- Figur 3: den Gesamtaufbau in perspektivischer Darstellung,
- Figur 4: einen Aufbau mit Kanalplatte,
- Figur 5: einen Aufbau mit mehreren Fluidführungsebenen,
- Figur 6: eine Kanalkreuzung,
- Figur 7: eine 3-Fluid-System,
- Figur 8: die Führung von Kompartimenten,
- Figur 9: einen elektrokinetischen Antrieb von Kompartimenten,
- Figur 10: eine Anordnung mit Sensoren und optischem Fenster,
- Figur 11a: eine Ausführung als Fluidschalter im eingeschalteten Zustand,
- Figur 11b: eine Ausführung als Fluidschalter im gesperrten Zustand,
- Figur 12: einen Fluidschalter mit einem Eingang und mehreren Ausgängen,
- Figur 13: die Draufsicht auf den Schnitt A-A in Figur 12,
- Figur 14: einen Fluidschalter mit einem Eingang und zwei wechselbaren Ausgängen
- und Figur 15: einen Verbindungskanal im Fluidschalter nach Figur 14.

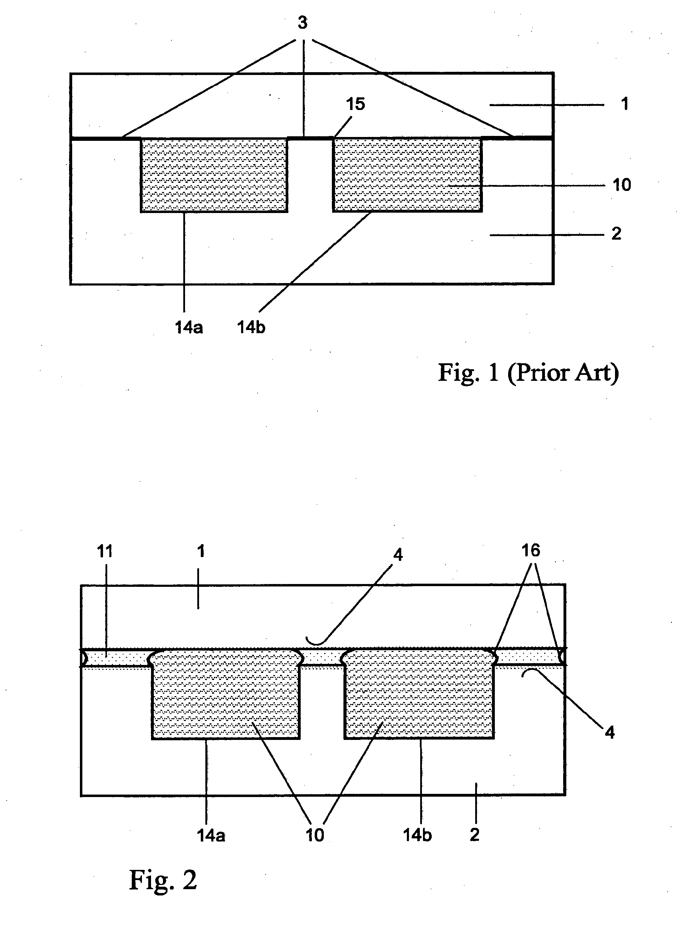

In **Figur 1** ist zunächst schematisch eine bekannte Bauart dargestellt. In einer Basisplatte 2 sind Mikrokanäle und Kavitäten eingearbeitet, beispielsweise wie in Figur 1 schematisch als Querschnitt durch zwei benachbarte Kanäle 14a und 14b dargestellt. Die beiden Fluidkanäle 14a und 14b werden nach oben durch eine gemeinsame Deckplatte 1 abgeschlossen. Diese Abdeckung stellt hohe Anforderungen an eine fluiddichte Verbindung 3 der Basisplatte 2 mit der Deckplatte 1. Insbesondere an den Kanten 15 besteht die Gefahr eines Eindringens von Probenfluid 10, wenn durch eine unzureichende Verbindung zwischen Deckplatte 1 und Basisplatte ein Kapillarspalt entsteht. Wird die Deckplatte 1 mit der Basisplatte 2 beispielsweise durch eine Klebung verbunden, besteht wiederum Gefahr, dass Klebstoff in den Kanal 14a oder 14b eintritt.

**Figur 2** zeigt den erfindungsgemäßen Aufbau des montier- und demontierbaren Mikrofluidiksystems. Zwischen Deckplatte 1 und der mit Kavitäten versehenen Basisplatte 2 befindet sich ein Kapillarspalt, der mit einem Dichtfluid 11 gefüllt wird, das verhindert, dass Probenfluid 10 in den Kapillarspalt zwischen der Basisplatte 2 und der Deckplatte 1 eintritt. Wenn das Probenfluid 10 ein polares Fluid ist, sind die einander zugewandten Oberflächen der Deckplatte 1 und der Basisplatte 2 hydrophob beschichtet. Das Dichtfluid 11 ist in diesem Fall ein unpolares Fluid. Bedingt durch die Beschichtung der Oberfläche ist das Probenfluid 10 nicht in der Lage, das unpolare Dichtfluid 11 aus dem Kapillarspalt zu verdrängen. Die hydrophoben Beschichtungen der Oberflächen sind nicht notwendig, wenn die Deckplatte 1 und die Basisplatte 2 aus Materialien bestehen, deren Oberflächen per se hydrophob sind.

Es entspricht dem Wesen der Erfindung, dass, wenn das Probenfluid ein unpolares Fluid ist, die Beschichtung der einander zugewandten Oberflächen der Deckplatte 1 und der Basisplatte 2 hydrophil und das Dichtfluid 11 ein polares Fluid sein muss.

Je kleiner der Kapillarspalt ist, desto größer kann der Druckunterschied zwischen den beiden Kanälen 14a und 14b sein, ohne dass ein Übertreten von Probenfluid 10 von einem auf den anderen Kanal erfolgen kann. Ein hinreichend kleiner Kapillarspalt kann beispielsweise bereits durch eine ausreichende Rauigkeit der Oberflächen von Deckplatte 1 und der Basisplatte 2 erzeugt werden. Zwischen dem Dichtfluid 11 und dem Probenfluid 10 bildet sich ein Meniskus 16 aus.

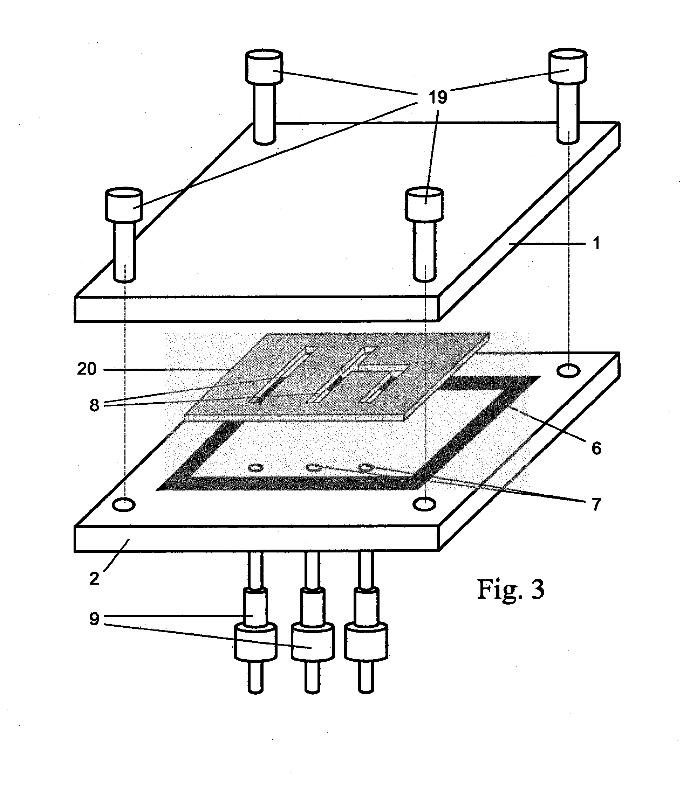

In **Figur 3** wird ein Gesamtaufbau des Systems dargestellt. Die Ausbildung einer Kanalstruktur erfolgt in diesem Beispiel durch eine durchstrukturierte Kanalplatte 20, die vorteilhaft aus einer Teflonplatte hergestellt ist, bei der die Kanalstruktur beispielsweise mittels eines Lasers ausgeschnitten wurde. Abhängig von den Polaritäten der verwendeten Fluide muss die Kanalplatte hydrophobe (wie im Fall von Teflon) oder hydrophile Oberflächeneigenschaften besitzen. Fluid-Anschlusslöcher 7 in der Basisplatte 2 sorgen für eine fluidische Kontaktierung über Schlauchanschlüsse 9. Das eigentliche Kanalsystem, das im Ausführungsbeispiel nach Fig. 3 durch die Basisplatte 2, die Deckplatte 1 und die Kanalplatte 20 gebildet wird, wird durch eine umlaufende Dichtung 6 abgeschlossen, um zu verhindern, dass Dichtfluid 11 durch den Kapillarspalt über die Ränder der Basisplatte 2 oder Deckplatte 1 nach außen abfließt.

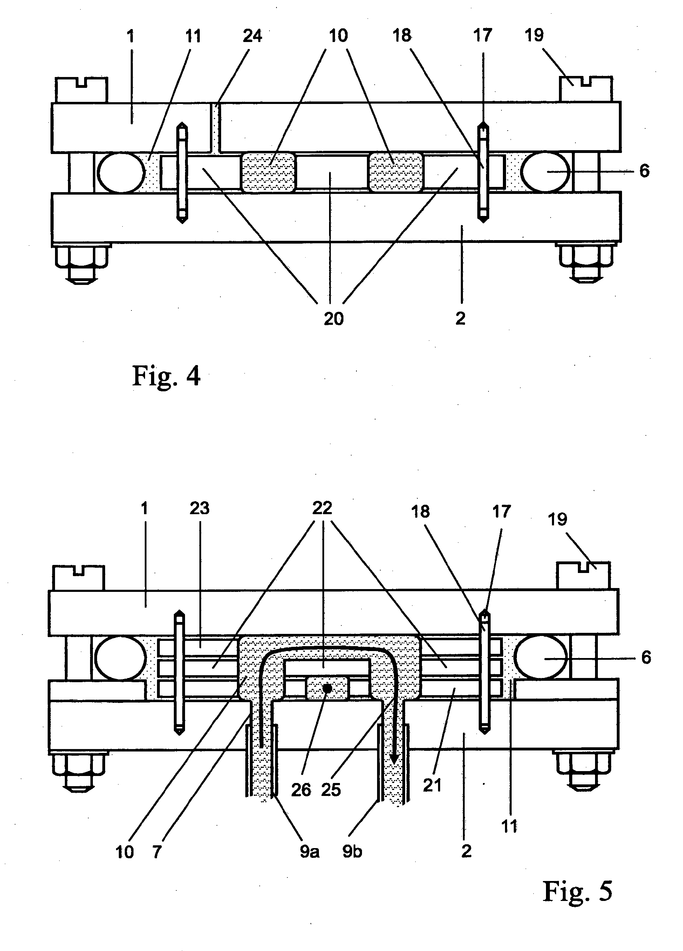

Das Mikrofluidiksystem wird, wie in **Figur 4** als Querschnitt dargestellt, durch Spannschrauben 19 zusammengedrückt. Die sich ergebende Weite der Kapillarspalte zwischen der Basisplatte 2 und der Kanalplatte 20 sowie der Deckplatte 1 wird zunächst durch das Zusammendrücken der Rahmendichtung 6 und letzten Endes durch die Rauhigkeit der Platten bestimmt. In einer Ausführung können die einander zugewandten Oberflächen von Kanalplatte 20, Deckplatte 1 und Basisplatte 2 aufgeraut werden, damit sich ein definierter Kapillarspalt einstellt. Durch Füllöffnungen 24 wird der Kapillarspalt zwischen Basisplatte 2, Deckplatte 1 und gegebenenfalls vorhandenen Kanalplatten 20 mit Dichtfluid 11 befüllt.

In einer weiteren Ausführung der Erfindung wird zur Herstellung eines definierten Kapillarspaltes zwischen Basisplatte 2, Kanalplatte 20 und Deckplatte 1 eine strukturierte Schicht mit einer Dicke, die der gewünschten Weite des Kapillarspaltes entspricht auf eine oder mehrere der Platten 1, 2, 20 bis 23 aufgebracht.

Durch Lösen der Spannschrauben 19 kann das Mikrofluidiksystem wieder geöffnet werden. Damit ergeben sich viele Möglichkeiten der Reinigung, des Austausches einzelner Komponenten und der Regenerierung von Oberflächenmodifikationen. Zur Ausrichtung der einzelnen Platten 1, 2, 20 werden im Ausführungsbeispiel Passstifte 18 verwendet, die in Passbohrungen 17 geführt werden.

Das einfache Öffnen und Schließen des Mikrofluidiksystems durch eine Schraub- oder Klemmverbindung ist gleichzeitig eine Grundlage für eine verbesserte Flutung der Kanalstruktur. Wie bekannt ist die Flutung unter Vermeidung von Lufteinschlüssen insbesondere bei komplexen Mikrokanalstrukturen auch mit wechselnden Kanalquerschnitten, Kammern und partiell hydrophoben und hydrophilen Oberflächen problematisch. Das erfindungsgemäße Verfahren schlägt vor, das Montieren und Verspannen der Platten 1, 2 und 20 in einem Behälter mit gefülltem Dichtfluid vorzunehmen. Im Anschluss an diesem Vorgang sind nicht nur die Kapillarspalten zwischen den einzelnen Platten 1, 2 und 20 mit Dichtfluid gefüllt, sondern auch die Fluidkanäle 14 selbst. Nach dem Verschluss des Mikrofluidiksystems wird durch Zuführung von Probenfluid 10 die in den Kanälen 14 befindliche Dichtfluid 11 verdrängt.

In **Figur 5** ist eine weitere Ausführung der Erfindung dargestellt. Dabei werden mehrere strukturierte Kanalplatten 21, 22, 23 übereinander gelegt. Dadurch können Kreuzungen von Fluidpfaden in der Art einer Mehrebenenleiterplatte hergestellt werden. Zur Verdeutlichung wird ein Fluidpfad 25 betrachtet, bei dem ein Probenfluid 10 am Schlauchanschluss 9a in das Mikrofluidiksystem eintritt, durch Bohrungen 7 in den Kanalplatten 21 und 22 in die Ebene der Kanalplatte 23 gelangt, in dieser Ebene den Fluidpfad 26 in der Ebene der Kanalplatte 21 kreuzt und das Mikrofluidiksystem durch Schlauchanschluss 9b wieder verlässt. Auch für diese in Figur 5 beschriebene Plattenanordnung schlägt das erfindungsgemäße Verfahren vor, das Montieren und Verspannen der Platten 1, 2, 20 bis 23 in einem Behälter mit gefülltem Dichtfluid vorzunehmen.

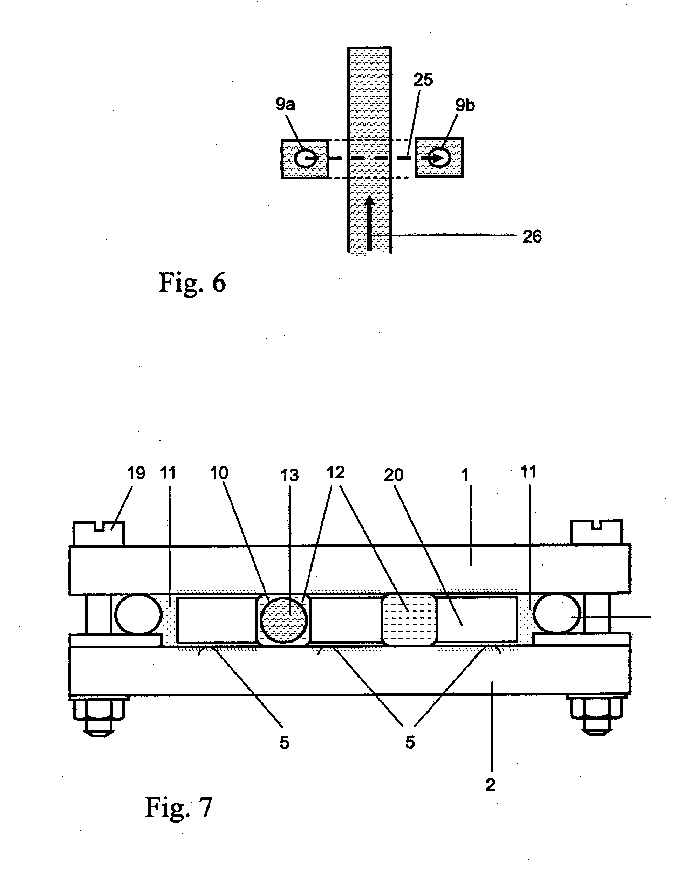

**Figur 6** verdeutlicht in einer Draufsicht den Verlauf der beiden sich kreuzenden Fluidpfade 25 und 26. Damit ist es möglich, auch relativ komplexe Kanalstrukturen mit einer Vielzahl von Funktionen in einem Mikrofluidsystem zu integrieren.

Eine weitere Ausführung der Erfindung für ein 2-Phasen-Fluidiksystem wird in **Figur 7** gezeigt. 2-Phasen-Fluidiksysteme sind durch einen segmentierten Probestrom gekennzeichnet. Ein Kompartiment 13, bestehend aus einem polaren Fluid beispielsweise mit eingeschlossenem organischem oder anorganischem Material, wird mit Hilfe eines unpolaren Transportfluids 12 durch das Kanalsystem transportiert. Durch die Nichtmischbarkeit des Transportfluids 12 und des Probenfluids 10 werden stabile, durch Oberflächenspannung gebildete Mikrosphären gebildet. In diesem Ausführungsbeispiel ist das Dichtfluid 11 wiederum als polares Fluid auszuführen, deren Benetzungsfähigkeit der Oberflächen höher ist als die des ebenfalls polaren Probenfluids 10. Diese Ausführungsform setzt voraus, dass die Oberflächen 5 der Basisplatte 2, Kanalplatte 20 und Deckplatte 1 strukturiert hydrophob und hydrophil beschichtet sind. In den eigentlichen Kanälen 14a und 14b darf keine Benetzung der Kanalwände durch das polare Probenfluid 10 möglich sein. Vorteil wiederum der offenen Bauweise des erfindungsgemäßen Mikrofluidiksystems ist, dass eine derartig strukturierte Beschichtung mit vertretbarem Aufwand möglich ist.

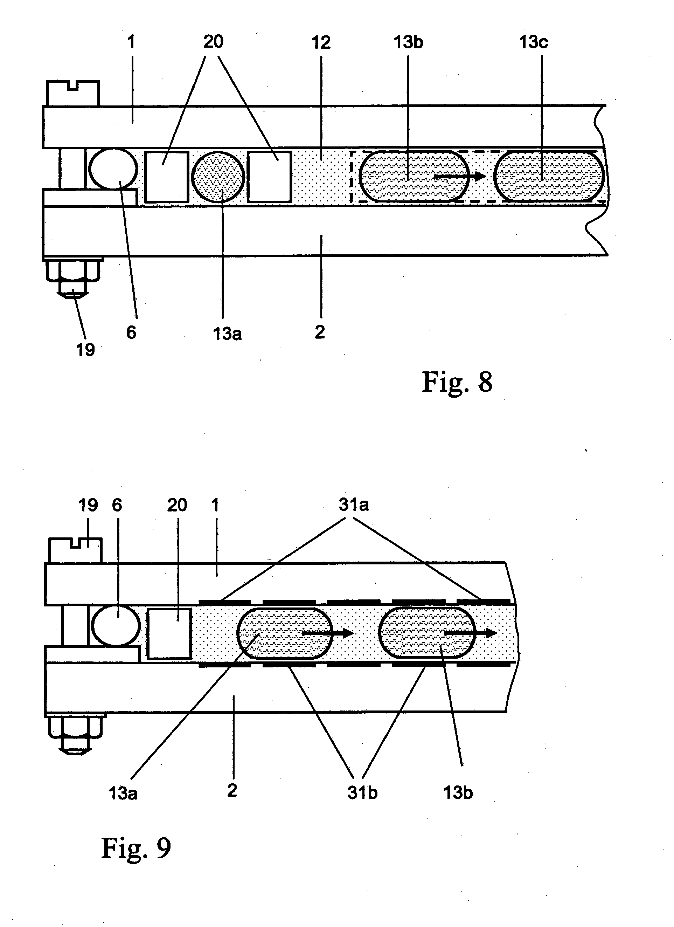

Auf ein gesondertes Dichtfluid kann verzichtet werden, wenn, wie in **Figur 8** dargestellt, das Transportfluid 12 eines 2-Phasen-Systems gleichzeitig auch als Dichtfluid verwendet wird. Bedingt durch den hohen Strömungswiderstand im engen Kapillarspalt gegenüber dem Strömungswiderstand im eigentlichen Kanal 14 kann das Überströmen von Transportfluid 12 durch den Kapillarspalt vermieden werden, wodurch der Abstand aufeinander folgender Kompartimente 13b und 13c konstant bleibt.

In einer weiteren in **Figur 9** dargestellten Ausführung der Erfindung werden die Kompartimente durch einen dielektrophoretischen Antrieb angetrieben. Zu diesem Zweck werden Deckplatte 1 und Basisplatte 2 mit Elektrodenpaaren 31a und 31b versehen, die durch eine entsprechende Beschaltung ein sich änderndes (z. B. wanderndes) elektrisches Feld erzeugen und die Kompartimente 13a und 13b bewegen.

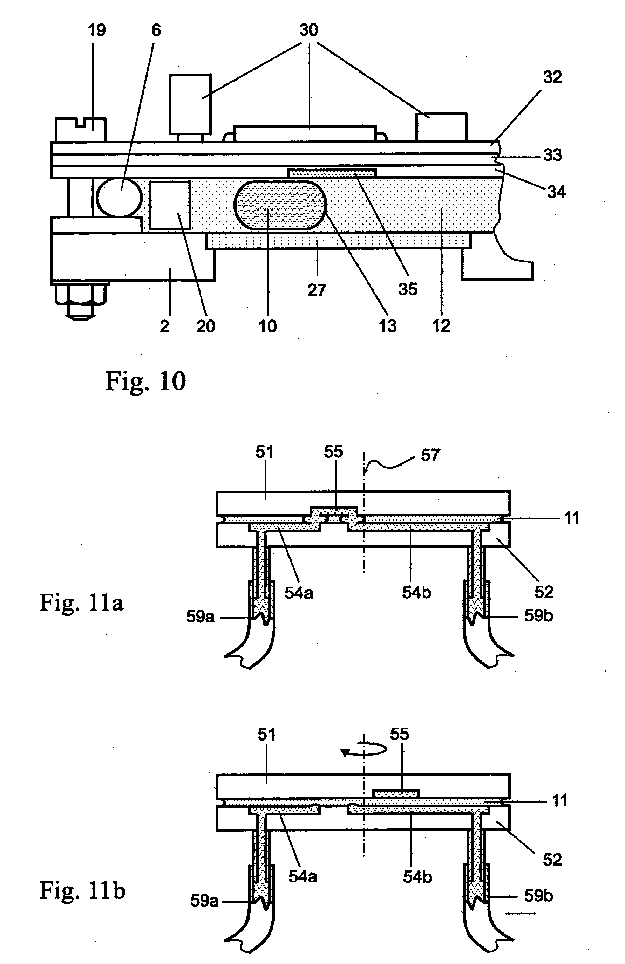

In **Figur 10** sind verschiedene weitere Möglichkeiten der Ausgestaltung der Erfindung dargestellt. Die Deckplatte 1 ist beispielsweise als Mehrebenenleiterplatte ausgeführt, die einerseits elektronische Bauelemente wie Verstärker, AD-Wandler oder Signalprozessoren trägt und elektrisch miteinander verbindet, zum anderen auf der den Fluidkanälen zugewandten Seite Sensorflächen 35 mit beispielsweise biologisch aktiven Oberflächen, pH-Sensoren oder andere Arten von Sensoren trägt. Das Wesen der Erfindung erlaubt es, nach der Montage des erfindungsgemäßen Mikrofluidiksystems die definiert angeordneten Sensoren, sofern sie nicht vor der Montage aktiviert waren, nach der Montage zu aktivieren bzw. während der Prozessdauer zu reaktivieren. Gleiches trifft zu für beispielsweise das Funktionalisieren und das Kalibrieren der Sensoren. An dieser beispielhaften Darstellung wird nochmals deutlich, welche Vorteile das erfindungsgemäße Mikrofluidiksystem besitzt, indem ein integrativer, hochkomplexer Aufbau mit der Eigenschaft einer einfachen Montage- und Demontage kombiniert wird.

Die Basisplatte 2 oder die Deckplatte 1 kann aus transparentem Material ausgeführt sein. In einer anderen Ausführungsvariante kann aber auch ein optisches Fenster 27, wie in Fig. 10 dargestellt verwendet werden. In einer weiteren Ausführung kann dieses optische Fenster 27 mit einer Abbildungseigenschaft in Form einer Linse ausgestattet werden, um eine hohe Apertur zu erzielen. Durch das optische Fenster 27 kann beispielsweise eine Auswertung von Kompartimenten erfolgen.

Für die Ausführung von Schaltfunktionen von Fluidströmen im erfindungsgemäßen Mikrofluidiksystem werden mindestens eine der Basis- oder Deckplatte oder mindestens eine der Kanalplatten gegeneinander verschoben oder verdreht. Bei der in **Figur 11** dargestellten Ausführung eines Fluidschalters ist eine runde Basisplatte 52 mit einer ebenfalls runden Deckplatte 51 versehen. Zwischen den beiden Platten befindet sich ein Dichtfluid 11. Sowohl die Basisplatte 52 als auch die Deckplatte 51 sind strukturiert und enthalten verschiedene Verbindungskanäle 54 und 55. Der Fluidstrom eines Probenfluids wird beispielsweise vom Verbindungsschlauch 59a über den Zuflusskanal 54a, dem Verbindungskanal 55, dem Abflusskanal 54b und dem Verbindungsschlauch 59b geführt. Die Kapillarität des Dichtfluids 11 im Spalt zwischen der Basisplatte 52 und der Deckplatte 51 verhindert ein Austreten des Probenfluid an der Verbindungsstelle zwischen Basisplatte 52 und Deckplatte 51. Je größer die Kapillarität des Dichtfluids 11 im Spalt zwischen Basisplatte 52 und Deckplatte 51 ist, desto höher ist der zulässige Druck des Probenfluids, der auf das Ventil wirken kann.

Wird nun die Deckplatte 51 gegenüber der Basisplatte 52 verdreht, so befindet sich der Verbindungskanal 55 nicht mehr in Deckung zu den Zuflusskanal 54a bzw. dem Abflusskanal 54b. Der Fluidstrom des Probenfluids ist damit gesperrt, wie in **Figur 11b** verdeutlicht wird.

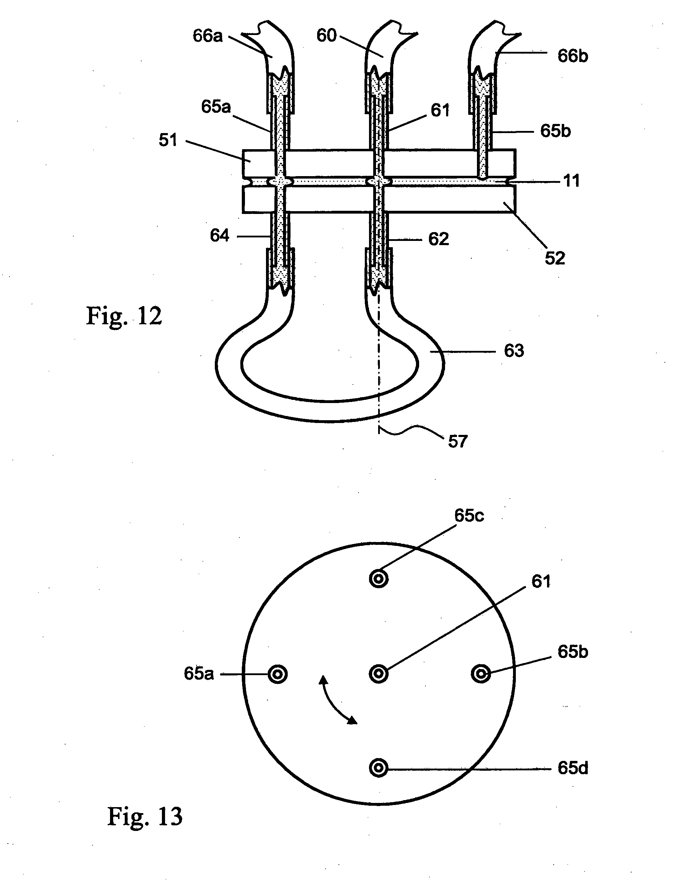

Eine weite Ausführungsform des Fluidschalters ist in **Figur 12** dargestellt. Der Fluidstrom eines Probenfluids wird über einen Schlauchanschluss 61 dem Mikrosystem zugeführt, das beispielsweise wiederum aus einer Deckplatte 51 und einer Basisplatte 52 besteht. Der Schlauchanschluss 61 befindet sich in der Achse 57, um die die Basisplatte 52 gegenüber der Deckplatte 51 gedreht werden kann. In der gleichen Achse befindet sich der Schlauchanschluss 62 in der Basisplatte 51, der über einen Schlauchanschluss 63 mit einem weiteren Schlauchanschluss 64 verbunden ist. Der Schlauchanschluss 64 befindet sich in einem Abstand von der Drehachse 57 und bewegt sich beim Verdrehen der Basisplatte 52 gegenüber der Deckplatte 51 auf einem Kreisbogen. Im gleichen Abstand von der Drehachse 57 befinden sich in der Deckplatte weitere Schlauchanschlüsse 65a bis 65d, wie **Figur 13** zeigt. Beispielsweise werden in Fig. 13 insgesamt vier Schlauchanschlüsse 65a bis 65d vorgesehen, die um 90° versetzt sind und einen gleichen Abstand zur Drehachse 57 im Zentrum der kreisförmigen Basisplatte 52 und Deckplatte 51 besitzen. Korrespondiert nun der Schlauchanschluss 64 mit einem der Schlauchanschlüsse 65a bis 65d, was beispielsweise durch eine Rastung unterstützt werden kann, so wird eine fluidische Verbindung für den Fluidstrom des Probenfluids auf einen der gewählten Schlauchanschlüsse 65a bis 65d hergestellt. Es ist dabei auch möglich, dass durch die Verbindungsschläuche 66a bis 66d verschiedene Probenfluide zugeführt werden können, von denen eines durch Verdrehen der Basisplatte 52 gegenüber der Deckplatte 51 ausgewählt werden kann und durch den Abflussschlauch 60 abgeführt wird.

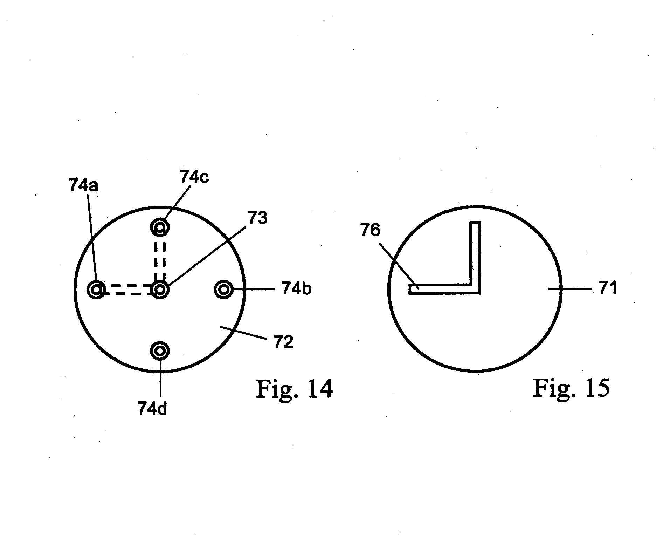

Eine weitere Ausführungsvariante eines Fluidschalters ist in den **Figuren 14 und 15** dargestellt. Die Drehachse 57 der kreisförmigen Deck- und Basisplatte 51 und 52 befindet sich wiederum in Flucht zum zentralen Schlauchanschluss 73, der hier in einer Basisplatte 72 angeordnet ist. In der Basisplatte 72 befinden sich weitere, beispielsweise vier Fluidanschlüsse 74a bis 74d, die einen gleichen Abstand zur Drehachse 57 beziehungsweise zum Schlauchanschluss 73 besitzen. In der Deckplatte 71 befindet sich ein winkelförmig angeordneter Verbindungskanal 76, der stellungsabhängig einen durch den Fluidanschluss 73 zugeführten Probenstrom jeweils zwei ausgewählten Fluidanschlüssen 74a bis 74d zuführt. Mit diesem Mikrofluidiksystem ist es möglich, beliebig viele Schaltzustände im Betriebsablauf eines Analyseverfahrens durch Verschieben von Deck-, Basis und Kanalplatten herzustellen.

### BEZUGSZEICHENLISTE

- 1: Deckplatte
- 2: Basisplatte
- 3: Fluiddichte Verbindung
- 4: Hydrophobe Beschichtung
- 5: Hydrophile Beschichtung
- 6: Rahmendichtung
- 7: Fluid - Anschlusslöcher
- 8: Fluidkanäle
- 9: Schlauchanschlüsse
- 10: Probenfluid
- 11: Dichtfluid
- 12: Transportfluid
- 13: Kompartimente
- 14: Fluidkanäle
- 15: Kante
- 16: Meniskus
- 17: Passbohrung
- 18: Passstift
- 19: Spannschrauben
- 20: Kanalplatte
- 21: Kanalplatte A
- 22: Kanalplatte B
- 23: Kanalplatte C
- 24: Füllöffnungen
- 25: Fluidpfad A
- 26: Fluidpfad
- 27: Optisches Fenster
- 30: Elektronische Bauelemente
- 31: Elektroden
- 32: Leiterplattenebene A
- 33: Leiterplattenebene B
- 34: Leiterplattenebene C
- 35: Sensor
- 51: Deckplatte des Fluidschalters
- 52: Basisplatte des Fluidschalters
- 54a: Zuflusskanal
- 54b: Abflusskanal
- 55: Verbindungskanal
- 57: Achse
- 59: Verbindungsschlauch
- 60: Abflussschlauch
- 61...65: Schlauchanschluss
- 66: Verbindungsschlau
- 71: Deckplatte, kreisförmig
- 72: Basisplatte, kreisförmig
- 73: Fluidanschluss für Zuführung
- 74: Fluidanschluss für Abfluss
- 76: Verbindungskanal

## Patentansprüche

1. Montier- und demontierbares Mikrofluidiksystem, bestehend aus einem Stapel von Platten, wobei mindestens eine Platte als Basisplatte (2) ausgeführt ist, die an ihrer Oberfläche Kanäle (14a, 14b) enthält, wobei sich zwischen einer weiteren Platte, die als Deckplatte (1) zum Abdecken der Kanäle (14a, 14b) auf der Oberfläche der Basisplatte (2) ausgeführt ist, und der Basisplatte (2) ein Kapillarspalt befindet, der mit einem Dichtfluid (11) gefüllt ist, wobei das Dichtfluid (11) ein unpolares Fluid ist und das Probenfluid (10) ein polares Fluid ist, und die einander zugewandten Oberflächen der Deckplatte (1) und der Basisplatte (2) hydrophob sind.

2. Montier- und demontierbares Mikrofluidiksystem, bestehend aus einem Stapel von Platten, wobei mindestens eine Platte als Basisplatte (2) ausgeführt ist, die an ihrer Oberfläche Kanäle (14a, 14b) enthält, wobei sich zwischen einer weiteren Platte, die als Deckplatte (1) zum Abdecken der Kanäle (14a, 14b) auf der Oberfläche der. Basisplatte (2) ausgeführt ist, und der Basisplatte (2) ein Kapillarspalt befindet, der mit einem Dichtfluid (11) gefüllt ist, wobei das Dichtfluid (11) ein polares Fluid ist und das Probenfluid (10) ein unpolares Fluid ist, und die einander zugewandten Oberflächen der Deckplatte (1) und der Basisplatte (2) hydrophyl sind.

3. Mikrofluidiksystem nach Anspruch 1 oder 2,
**dadurch gekennzeichnet, dass** zwischen der Basisplatte (2) und der Deckplatte (1) eine oder mehrere Kanalplatten (20) mit Ausformungen zur Durchleitung eines Probenfluids (10) und/oder Transportfluids (12) angeordnet sind und die Kapillarspalten zwischen Basisplatte (2), den ein oder mehreren Kanalplatten (20) und der Deckplatte (1) mit einem Dichtfluid (11) gefüllt ist.

4. Mikrofluidiksystem nach einem der vorhergehenden Ansprüche,
**dadurch gekennzeichnet, dass** Mittel zum Ausrichten der Basisplatte (2), Deckplatte (1) und/oder Kanalplatten (20) vorhanden sind.

5. Mikrofluidiksystem nach einem der vorhergehenden Ansprüche,
**dadurch gekennzeichnet, dass** Spannelemente vorhanden sind, um die Basisplatte (2) und Deckplatte (1) und die dazwischen liegenden Kanalplatten (20) miteinander zu verpressen.

6. Mikrofluidiksystem nach einem der vorhergehenden Ansprüche,
**dadurch gekennzeichnet, dass** eine Rahmendichtung vorhanden ist, welche die gesamte Kanalstruktur umgibt.

7. Mikrofluidiksystem nach einem der vorhergehenden Ansprüche,
**dadurch gekennzeichnet, dass** Füllöffnungen in der Basisplatte (2) und Deckplatte (1) zum Befüllen des Dichtfluids (11) vorhanden sind.

8. Mikrofluidiksystem nach einem der vorhergehenden Ansprüche,
**dadurch gekennzeichnet, dass** mindestens eine der Basisplatte (2) oder Deckplatte (1) und/oder eine der dazwischen liegenden Kanalplatten (20) aus transparentem Material besteht.

9. Mikrofluidiksystem nach einem der vorhergehenden Ansprüche,
**dadurch gekennzeichnet, dass** mindestens eine der Basisplatte (2) oder Deckplatte (1) und/oder eine der dazwischen liegenden Kanalplatten (20) aktive und passive Funktionselemente sowie fluidische Anschlüsse enthält.

10. Mikrofluidiksystem nach Anspruch 9,
**dadurch gekennzeichnet, dass** die aktiven und passiven Funktionselemente hydrophob oder hydrophil beschichtet sind.

11. Mikrofluidiksystem nach einem der vorhergehenden Ansprüche,
**dadurch gekennzeichnet, dass** die Oberflächen der Basisplatte (2) oder Deckplatte (1) und/oder eine der dazwischen liegenden Kanalplatten (20) mit einer Rauigkeit versehen sind, sodass beim Zusammenpressen der Basisplatte (2) und Deckplatte (1) und einer der dazwischen liegenden Kanalplatten (20) Kapillarspalte definierter Weite entstehen.

12. Mikrofluidiksystem nach einem der vorhergehenden Ansprüche,
**dadurch gekennzeichnet, dass** mindestens eine der Basisplatte (2) oder Deckplatte (1) und/oder mindestens eine der Kanalplatten (20) verschiebbar oder verdrehbar ist.

13. Verfahren zur Flutung eines montier- und demontierbaren Mikrofluidiksystems nach einem der Ansprüche 1 bis 12,
**dadurch gekennzeichnet, dass** das Mikrofluidiksystem im demontierten Zustand in einen Behälter mit Dichtfluid getaucht wird, unter Luftabschluss die Basisplatte (2) und Deckplatte (1) und zwischen liegende Kanalplatten (20) ausgerichtet und miteinander verspannt werden und dass nach dem Verspannen des Mikrofluidiksystems und Herstellung der fluidischen Anschlüsse die in den Kanälen befindliche Dichtfluid (11) durch Probenfluid (10) oder Transportfluid (12) ersetzt wird.

## Claims

1. Mountable and dismountable microfluid system, consisting of a stack of plates, wherein at least one plate is designed as a base plate (2), which contains channels (14a, 14b) on its surface, wherein a capillary gap is located between the base plate (2) and a further plate, which is designed as a top plate (1) for covering the channels (14a, 14b) on the surface of the base plate (2), which capillary gap is filled with a sealing fluid (11), wherein the sealing fluid (11) is a nonpolar fluid and the sample fluid (10) is a polar fluid, and the mutually facing surfaces of the top plate (1) and of the base plate (2) are hydrophobic.

2. Mountable and dismountable microfluid system, consisting of a stack of plates, wherein at least one plate is designed as a base plate (2), which contains channels (14a, 14b) on its surface, wherein a capillary gap is located between the base plate (2) and a further plate, which is designed as a top plate (1) for covering the channels (14a, 14b) on the surface of the base plate (2), which capillary gap is filled with a sealing fluid (11), wherein the sealing fluid (11) is a polar fluid and the sample fluid (10) is a nonpolar fluid, and the mutually facing surfaces of the top plate (1) and of the base plate (2) are hydrophilic.

3. Microfluid system according to Claim 1 or 2, **characterized in that** one or more channel plates (20) with recesses for the passage of a sample fluid (10) and/or transport fluid (12) are arranged between the base plate (2) and the top plate (1), and the capillary gaps between the base plate (2), the one or more channel plates (20) and the top plate (1) are filled with a sealing fluid (11).

4. Microfluid system according to one of the preceding claims, **characterized in that** means are present for aligning the base plate (2), top plate (1) and/or channel plates (20).

5. Microfluid system according to one of the preceding claims, **characterized in that** clamping elements are present for pressing the base plate (2) and top plate (1) and the channel plates (20) lying therebetween against each other.

6. Microfluid system according to one of the preceding claims, **characterized in that** a frame seal is present which surrounds the entire channel structure.

7. Microfluid system according to one of the preceding claims, **characterized in that** filling openings are present in the base plate (2) and top plate (1) for filling the sealing fluid (11).

8. Microfluid system according to one of the preceding claims, **characterized in that** at least one of base plate (2) and top plate (1) and/or one of the channel plates (20) lying therebetween is made of transparent material.

9. Microfluid system according to one of the preceding claims, **characterized in that** at least one of base plate (2) and top plate (1) and/or one of the channel plates (20) lying therebetween contains active and passive functional elements and fluidic connections.

10. Microfluid system according to Claim 9, **characterized in that** the active and passive functional elements have a hydrophobic or hydrophilic coating.

11. Microfluid system according to one of the preceding claims, **characterized in that** the surfaces of the base plate (2) or top plate (1) and/or one of the channel plates (20) lying therebetween are provided with a roughness, such that capillary gaps of defined width form when the base plate (2) and top plate (1) and one of the channel plates (20) lying therebetween are pressed together.

12. Microfluid system according to one of the preceding claims, **characterized in that** at least one of base plate (2) and top plate (1) and/or at least one of the channel plates (20) is displaceable or rotatable.

13. Method for flooding a mountable and dismountable microfluid system according to one of Claims 1 to 12, **characterized in that** the microfluid system in the dismounted state is dipped into a container with sealing fluid, the base plate (2) and top plate (1) and intermediate channel plates (20) are aligned and clamped together under exclusion of air, and **in that**, after the microfluid system has been clamped and the fluidic connections have been produced, the sealing fluid (11) present in the channels is replaced by sample fluid (10) or transport fluid (12).

## Revendications

1. Système microfluidique pouvant être monté et démonté, se composant d'un empilement de plaques, dans lequel au moins une plaque est configurée en plaque de base (2), qui comporte des canaux (14a, 14b) à sa surface, dans lequel il se trouve, entre une autre plaque, qui est configurée en plaque de recouvrement (1) pour recouvrir les canaux (14a, 14b) sur la surface de la plaque de base (2), et la plaque de base (2), une fente capillaire qui est remplie avec un fluide d'étanchéité (11), dans lequel le fluide d'étanchéité (11) est un fluide homopolaire et le fluide d'échantillon (10) est un fluide polaire, et les surfaces tournées l'une vers l'autre de la plaque de recouvrement (1) et de la plaque de base (2) sont hydrophobes.

2. Système microfluidique pouvant être monté et démonté, se composant d'un empilement de plaques, dans lequel au moins une plaque est configurée en plaque de base (2), qui comporte des canaux (14a, 14b) à sa surface, dans lequel il se trouve, entre une autre plaque, qui est configurée en plaque de recouvrement (1) pour recouvrir les canaux (14a, 14b) sur la surface de la plaque de base (2), et la plaque de base (2), une fente capillaire qui est remplie avec un fluide d'étanchéité (11), dans lequel le fluide d'étanchéité (11) est un fluide polaire et le fluide d'échantillon (10) est un fluide homopolaire, et les surfaces tournées l'une vers l'autre de la plaque de recouvrement (1) et de la plaque de base (2) sont hydrophiles.

3. Système microfluidique selon la revendication 1 ou 2, **caractérisé en ce qu'**une ou plusieurs plaque(s) à canaux (20) avec des déformations pour le guidage d'un fluide d'échantillon (10) et/ou d'un fluide de transport (12) est/sont disposée(s) entre la plaque de base (2) et la plaque de recouvrement (1) et les fentes capillaires entre la plaque de base (2), la ou les plaque (s) à canaux (20) et la plaque de recouvrement (1) sont remplies avec un fluide d'étanchéité (11).

4. Système microfluidique selon l'une quelconque des revendications précédentes, **caractérisé en ce qu'**il comporte des moyens pour aligner la plaque de base (2), la plaque de recouvrement (1) et/ou des plaques à canaux (20).

5. Système microfluidique selon l'une quelconque des revendications précédentes, **caractérisé en ce qu'**il comporte des éléments de serrage, afin de presser les unes contre les autres la plaque de base (2) et la plaque de recouvrement (1) et les plaques à canaux (20) placées entre celles-ci.

6. Système microfluidique selon l'une quelconque des revendications précédentes, **caractérisé en ce qu'**il comporte un joint d'étanchéité d'encadrement, qui entoure toute la structure de canaux.

7. Système microfluidique selon l'une quelconque des revendications précédentes, **caractérisé en ce qu'**il comporte des ouvertures de remplissage dans la plaque de base (2) et dans la plaque de recouvrement (1) pour le remplissage avec le fluide d'étanchéité (11).

8. Système microfluidique selon l'une quelconque des revendications précédentes, **caractérisé en ce qu'**au moins une de la plaque de base (2) ou de la plaque de recouvrement (1) et/ou une des plaques à canaux (20) placées entre celles-ci se composent d'un matériau transparent.

9. Système microfluidique selon l'une quelconque des revendications précédentes, **caractérisé en ce qu'**au moins une de la plaque de base (2) ou de la plaque de recouvrement (1) et/ou une des plaques à canaux (20) placées entre celles-ci comportent des éléments fonctionnels actifs et passifs ainsi que des raccords fluidiques.

10. Système microfluidique selon la revendication 9, **caractérisé en ce que** les éléments fonctionnels actifs et passifs portent un revêtement hydrophobe ou hydrophile.

11. Système microfluidique selon l'une quelconque des revendications précédentes, **caractérisé en ce que** les surfaces de la plaque de base (2) ou de la plaque de recouvrement (1) et/ou une des plaques à canaux (20) placées entre celles-ci sont dotées d'une rugosité telle que, lors du serrage de la plaque de base (2) et de la plaque de recouvrement (1) et d'une des plaques à canaux (20) placées entre celles-ci, il apparaisse des fentes capillaires de largeur définie.

12. Système microfluidique selon l'une quelconque des revendications précédentes, **caractérisé en ce qu'**au moins une de la plaque de base (2) ou de la plaque de recouvrement (1) et/ou au moins une des plaques à canaux (20) peuvent se déplacer ou tourner.

13. Procédé de noyage d'un système microfluidique pouvant être monté et démonté selon l'une quelconque des revendications 1 à 12, **caractérisé en ce que** l'on plonge le système microfluidique à l'état démonté dans un réservoir avec du fluide d'étanchéité, on aligne et on serre les unes avec les autres à l'abri de l'air la plaque de base (2) et la plaque de recouvrement (1) et des plaques à canaux intercalées (20) et **en ce que**, après le serrage du système microfluidique et la réalisation des raccords fluidiques, on remplace le fluide d'étanchéité (11) présent dans les canaux par un fluide d'échantillon (10) ou un fluide de transport (12).
